# EUROPÄISCHE PATENTSCHRIFT

(11) **EP 1 992 543 B1**
(45) Veröffentlichungstag und Bekanntmachung des Hinweises auf die Patenterteilung: **18.08.2010**
(21) Anmeldenummer: 07015646.8
(22) Anmeldetag: 08.08.2007
(51) Int. Cl.: B62B 7/14, B62B 9/12, B62B 9/20

(54) **Fahrgestell für einen Kinderwagen oder dergleichen**
Chassis for a perambulator or similar
Châssis pour voiture d'enfant ou pareil

(30) Priorität: 11.08.2006 DE 202006012430 U
(43) Veröffentlichungstag der Anmeldung: 19.11.2008
(73) Patentinhaber: HAUCK GmbH & Co. KG, 96242 Sonnefeld (DE)
(72) Erfinder: Feyler, Jörg, 95268 Mitwitz (DE)
(74) Vertreter: von Eichel-Streiber, Caspar

(56) Entgegenhaltungen:
- WO-A-01/32493
- WO-A-2005/002945
- DE-A1- 4 025 009
- DE-U1- 20 313 208
- FR-A- 2 856 970

## Beschreibung

Die Erfindung betrifft ein Fahrgestell für einen Kinderwagen, eine Kinderkarre oder dergleichen gemäß dem Oberbegriff des Schutzanspruches 1.

Derartige Fahrgestelle sind beispielsweise aus der WO 01/32493 A1 oder der DE 40 25 009 A1 bekannt. So sind Kinderwagen, in denen Säuglinge in einer Liegeschale liegend transportiert werden können, Kinderkarren, in denen für den Transport von Kleinkindern diese in einem Sitz sitzend transportiert werden können, und dergleichen Gefährte für Babys und Kleinkinder heutzutage üblicherweise so aufgebaut, dass sie ein Unterteil in Form eines in der Regel durch Zusammenklappen verkleinerbaren Fahrgestells und einen über eine lösbare Verbindung an dem Fahrgestell festlegbaren Aufsatz in Form einer Kinderwagenliegeschale, eines Kinderkarrensitzes oder dergleichen enthalten.

Ferner sind Fahrgestelle bekannt, die verwendet werden können, um darauf Autosicherheitssitze, insbesondere solche Sitzschalen für Säuglinge, festzulegen und in dieser Kombination wie einen Kinderwagen zu verwenden.

In jüngster Zeit wurden Kinderwagen mit Fahrgestellen entwickelt, die durch die Verwendung vergleichsweise kleiner Räder mit großem Schwenkradius sehr beweglich sind und sich auf ein sehr kleines Maß zusammenlegen lassen. Ein Beispiel für solche Kinderwagen ist das unter der Marke Bugaboo® vertriebene Modell. Der Nachteil bei dieser Art von Modellen ist, dass die kompakte Bauweise dazu führt, dass die zugehörigen Aufsätze an dem Fahrgestell in einer sehr niedrigen Montagehöhe angebracht sind. Dies bedeutet insbesondere für größere Eltern, dass sie sich bspw. zu einer Kinderwagenliegeschale sehr weit hinunterbeugen müssen, um ein Kind in diese hinein zu legen oder aus dieser hinaus zu heben. Dies ist für den Rücken des jeweiligen Elternteils eine hohe Belastung. Ferner geht der unmittelbare Kontakt zu einem vergleichsweise tief liegenden bzw. sitzenden Kind verloren. In Bereichen mit hohem Verkehrsaufkommen, wie z.B. in der Stadt an viel befahrenen Straßen, kommt hinzu, dass die näher am Boden liegenden bzw. sitzenden Kinder den dort höheren Abgas- und sonstigen Schadstoffkonzentrationen ausgesetzt sind.

Hier kann grundsätzlich eine Möglichkeit zur Höhenverstellung der Anschlussvorrichtung Abhilfe schaffen. Über eine solche kann eine gewünschte Montagehöhe der Kinderwagenliegeschale oder dergleichen über dem Boden individuell eingestellt werden.

Vorschläge für eine solche Möglichkeit zur Höhenverstellung sind bereits gemacht worden. So ist in der WO 2005/002945 A2 ein Gestell beschrieben, welches eine zentrale Diagonalstrebe aufweist, an der in höhenverstellbarer Weise ein Kindersitz angeordnet werden kann.

Aus der WO 01/32493 A1 ist eine Kinderkarre bekannt, die für behinderte Kinder eingesetzt werden kann und über eine scherenförmige Anordnung von Seitenstreben in der Höhe verstellbar ist.

Jedoch gibt es hinsichtlich der Realisierung der Höhenverstellbarkeit noch Verbesserungsbedarf. Die in der WO 2005/002945 gezeigte Lösung eignet sich zwar für die Realisierung einer Kinderkarre mit einem Kindersitz, allerdings kann an der zentralen Diagonalstrebe eine vollwertige Kinderwagenliegeschale nicht befestigt werden, so dass dieses Konzept für die Zusammenstellung eines vollwertigen Kinderwagens unbrauchbar ist.

Bei der aus der WO 01/32493 bekannten Lösung ist es zwar möglich, das Fahrgestell durch Zusammenklappen auf ein kleine Maß zu reduzieren, jedoch ist die dort für einen Kinderwagen für Kinder mit einer Behinderung gezeigte Bauweise des Mechanismus zur Höhenverstellung baulich komplex und führt insbesondere zu einem hohen Gewicht, was für "normale" Kinderwagen nicht gewünscht ist.

Ziel der Erfindung ist es daher, ein Fahrgestell für einen Kinderwagen, eine Kinderkarre oder dergleichen der einganges genannten Art dahingehend weiterzubilden, dass es eine leichte Bauweise erlaubt und auch den Aufbau eines vollwertigen Kinderwagens ermöglicht.

Diese Aufgabe wird erfindungsgemäß gelöst durch ein Fahrgestell für einen Kinderwagen, eine Kinderkarre oder dergleichen mit den Merkmalen des Schutzanspruchs 1. Vorteilhafte Weiterbildungen dieses Fahrgestells sind in den abhängigen Ansprüchen 2 bis 7 genannt.

Die wesentliche Idee der Erfindung besteht darin, die Höhenverstellbarkeit der Anschlussvorrichtung zum Festlegen der Kinderwagenliegeschale, des Kinderkarrensitzes oder dergleichen Elements durch zwei seitlich an dem Gestell, also in Fahrtrichtung rechts und links, angeordnete in jeweils einem Führungsrohr laufende Innenrohre zu realisieren, auf deren Oberseite jeweils ein Anschlusselement als Bestandteil der Anschlussvorrichtung gebildet ist. Eine solche Einrichtung zum Verstellen der Montagehöhe hat gegenüber der in der WO 2005/002945 A2 offenbarten Konstruktionsvariante den entscheidenden Vorteil, dass sie ohne wesentlichen konstruktiven Zusatzaufwand in bekannte Fahrgestelle für Kinderwagen, Kinderkarren oder dergleichen integriert werden kann, wobei hiermit dann gleichermaßen Kinderwagenliegeschalen, Kinderkarrensitze, Kinderautosicherheitssitze und dergleichen auf der höhenverstellbaren Anschlussvorrichtung angeordnet werden können.

Im Vergleich mit der in der WO 01/32493 A1 offenbarten Lösung ist die erfindungsgemäße Lösung einfacher aufgebaut und besteht aus wenigen, in leichter Bauweise zu realisierenden Teilen.

Ein weiterer Vorteil besteht darin, dass, sofern ein zusammenklappbares Fahrgestell verwendet werden soll, die erfindungsgemäße Lösung nach wie vor ein Zusammenklappen des Fahrgestells auf sehr kompakte Ausmaße ermöglicht.

Die Einrichtung zum Verstellen der Höhe der Anschlussvorrichtung ist erfindungsgemäß in wenigstens zwei Positionen arretierbar. Selbstverständlich ist es möglich und erhöht den Komfort des erfindungsgemäßen Fahrgestells, wenn die Einrichtung in mehr als zwei Positionen in der Höhe arretierbar ist. Es ist auch denkbar, eine stufenlose Einstellmöglichkeit zu schaffen.

Derzeit wird eine Distanz zwischen einer niedrigsten und einer höchsten Endstellung des Innenrohres in dem zugeordneten Führungsrohr von zwischen 100 mm und 150 mm, insbesondere zwischen 120 mm und 130 mm bevorzugt. Eine solche Distanz und damit Verstellhöhe erlaubt noch ein kompaktes Zusammenklappen.

In einer weiteren vorteilhaften Ausgestaltung der Erfindung ist vorgesehen, dass die Innenrohre der Einrichtung zum Verstellen der Höhe der Anschlussvorrichtung miteinander über eine starre Verbindung verbunden sind. Dies kann z.B. über eine mit beiden Innenrohren fest verbundene, diese verbindende Stange geschehen oder in anderer geeigneter Weise. Eine solche Verbindung hat den Vorteil, dass sichergestellt wird, dass beide Innenrohre gegenüber den Führungsrohren stets nur auf gleicher Höhe eingestellt werden können. Somit ist sichergestellt, dass nicht versehentlich beim Verstellen nur eines der Innenrohre in dem zugehörigen Führungsrohr eine seitlich schräge bzw. verkippte Position einer auf dem Fahrgestell montierten Kinderwagenliegeschale, eines Kinderkarrensitzes oder dergleichen und damit eine Unfallgefahr entsteht.

Mit Vorteil sind bei einer zum Zusammenklappen vorgesehenen Bauweise des Fahrgestells die Führungsrohre im Bereich von zum Zusammenklappen des Gestells vorgesehenen Gelenken angeordnet. Auf diese Weise können die Halterungen für die Führungsrohre zusammen mit einem Gelenkelement ausgeführt werden, was zusätzliche Anbauteile erspart und eine damit auch Kostenersparnis bei dem Zusammenbau des erfindungsgemäßen Fahrgestells mit sich bringt.

Die gemäß einer weiteren vorteilhaften Ausgestaltung der Erfindung vorgeschlagene Ausführung der Führungs- und Innenrohre als Vierkantrohre stellt eine sehr stabile und insbesondere verdrehsichere Lösung dar. In diesem Fall ist eine mögliche Ausgestaltung eines Arretiermechanismus zum Festlegen des Innenrohres in einem Führungsrohr in einer gewünschten Position näher erläutert, wobei in jedem Innenrohr ein Paar in einer Kulisse geführter, durch die Kulissenführung hinsichtlich ihres Abstandes verlagerbarer Verriegelungsstifte angeordnet ist. Die Kulissenführung ist über eine federbelastete Zugstange oder ein vergleichbares Element (ein Zugseil o. dgl.) mit einem in dem Innenrohr schwenkbar festgelegten Auslösehebel verbunden. Dieser Auslösehebel ist durch einen vertikal verlaufenden Schlitz in dem Führungsrohr mit einer Betätigungselement aus diesem hinaus geführt, so dass eine Betätigung des Auslösehebels von außen möglich ist. In dem Führungsrohr befinden sich in wenigstens zwei unterschiedlichen Positionen Verriegelungsvorsprünge, hinter denen die Verriegelungsstifte arretieren. In einem Grundzustand, in dem die Zugstange durch die Federbelastung in eine Normalposition gezogen und der Betätigungshebel entsprechend in einer nicht Betätigungsstellung gehalten ist, können die Verriegelungsstifte z.B. in der Kulisse nach außen weisen. So können sie hinter entsprechenden Verriegelungsvorsprüngen in dem Führungsrohr liegen und das Innenrohr in seiner Position halten. Durch Betätigen des Auslösehebels kann dann die Kulisse, die z.B. diagonal verlaufende Führungsschlitze aufweist, nach oben gezogen bzw. nach unten gedrückt werden, wobei die z.B. in einem waagerechten Schlitz gelagerten Verriegelungsstifte zueinander gezwungen werden und sich so aus dem jeweils zugeordneten Verriegelungsvorsprung in dem Führungsrohr lösen. Nun kann das Innenrohr in seiner Position verstellt werden, bis bei Loslassen des Auslösehebels die Verriegelungsstifte durch die von der Federkraft in ihrer Ausgangsstellung zurückgezogene Kulissenführung wieder in ihre äußeren Positionen gezwungen werden und hinter einem weiteren Verriegelungsvorsprung aufliegen.

Schließlich wird in einer weiteren vorteilhaften Weiterbildung der Erfindung beansprucht, dass die Anschlusselemente auf den Stirnseiten der Innenrohre angeordnet und Riegelzapfen oder Zapfenaufnahmen sind, die mit entsprechend geformten Zapfenaufnahmen bzw. Riegelzapfen an einer Kinderwagenliegeschale, einem Kinderkarrensitz, einem Kinderautosicherheitssitz oder dergleichen zusammen wirken.

Weitere Vorteile und Merkmale der Erfindung ergeben sich aus der nachfolgenden Beschreibung von Ausführungsbeispielen anhand der beigefügten Figuren. Dabei zeigen:
- Fig. 1: eine dreidimensionale Ansicht eines erfindungsgemäßen Fahrgestells schräg von vorn,
- Fig. 2: eine Ansicht des Fahrgestells aus Fig. 1 von der Seite mit in der hochgestellten Position befindlicher Einrichtung zum Verstellen der Höhe der Anschlussvorrichtung,
- Fig. 3: eine dreidimensionale Ansicht eines erfindungsgemäßen Fahrgestells mit einem aufgesetzten Rahmen eines Kinderkarrensitzes schräg von vorn,
- Fig. 4: eine Ansicht der Anordnung aus Fahrgestell und aufgesetztem Rahmen gemäß Fig. 3 von der Seite mit in einer unteren Position festgestellter Einrichtung zum Verstellen der Höhe der Anschlussvorrichtung,
- Fig. 5: eine Ansicht wie in Fig. 4, jedoch mit hochgestellter Einrichtung zum Verstellen der Höhe der Anschlussvorrichtung,
- Fig. 6: eine dreidimensionale separate Ansicht der Einrichtung zum Verstellen der Höhe der Anschlussvorrichtung,
- Fig. 7: eine Ansicht der in Fig. 6 gezeigten Einrichtung von der Seite und
- Fign. 8a und 8b: jeweils in einer Schnittansicht die Anordnung aus Führungsrohr und Innenrohr mit wesentlichen Elementen einer Feststelleinrichtung in einer unteren (Fig. 8a) und einer ausgefahrenen, oberen (Fig 8b) Position.

In den Figuren sind gleiche Teile mit gleichen Bezugsziffern versehen.

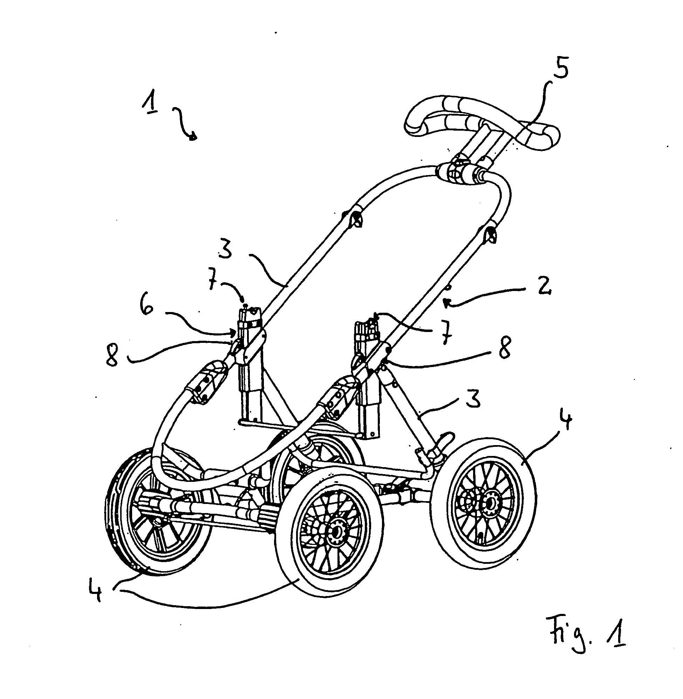

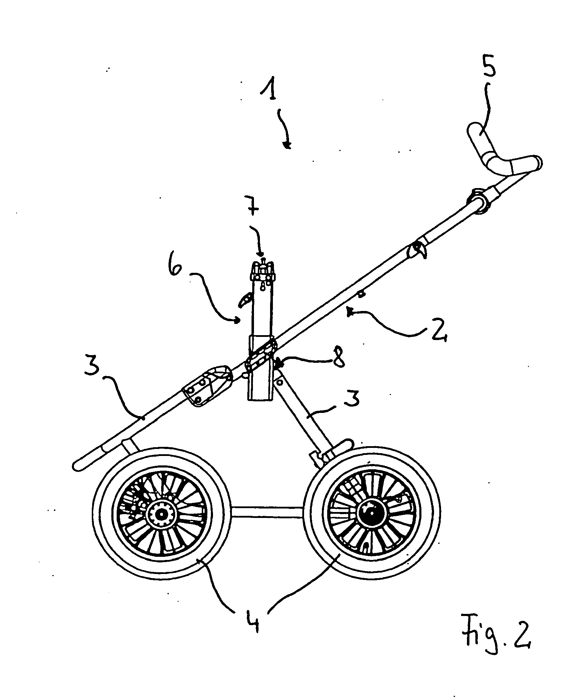

In den Figuren 1 und 2 ist jeweils in einer dreidimensionalen Ansicht schräg von vorn (Fig. 1) und in einer Seitenansicht (Fig. 2) ein erfindungsgemäßes Fahrgestell für einen Kinderwagen, eine Kinderkarre oder dergleichen in einem Ausführungsbeispiel gezeigt und mit 1 bezeichnet. Das Fahrgestell 1 enthält ein Gestell 2 aus verschiedentlich miteinander zusammengefügten Streben 3, die in diesem Ausführungsbeispiel rohrförmig sind, an dem Gestell 2 angeordneten Rädern 4 und einem an dem Gestell 2 angeordneten Griff 5. An dem Gestell 2 ist ferner eine Einrichtung 6 zum Verstellen der Höhe einer Anschlussvorrichtung 7 für eine Kinderwagenliegeschale, einen Kinderkarrensitz oder dergleichen angeordnet. Diese Einrichtung 6 ist in Fig. 1 in einer unteren, in Fig. 2 in einer oberen arretierten Position gezeigt. Das Fahrgestell 1 ist in dieser Ausführungsvariante zusammenklappbar ausgestaltet, wozu u.a. Gelenke 8 zwischen den einzelnen Streben 3 vorgesehen sind. Im Bereich der hier dargestellten Gelenke 8 ist die Einrichtung zur Höhenverstellung festgelegt, so dass die Gelenke 8 und die Aufnahme der Einrichtung 6 zur Höhenverstellung in einem einzigen Element miteinander vereint sind. Dies vereinfacht die Konstruktion des Fahrgestells 1 und spart Herstellungs- und Montagekosten.

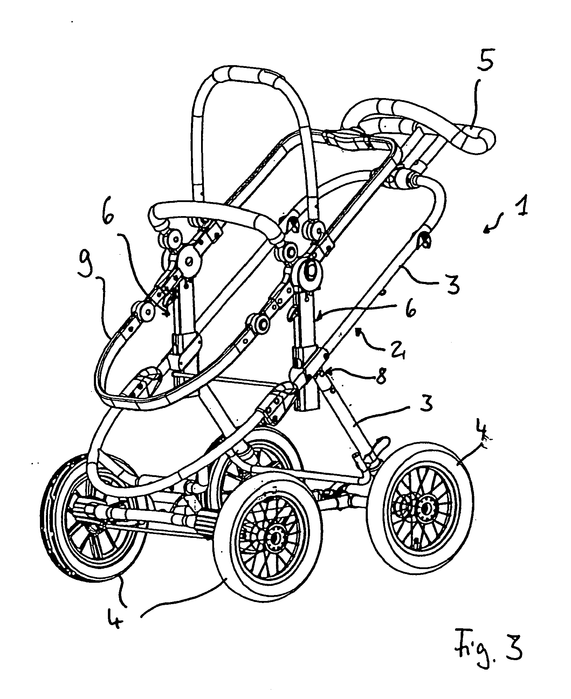

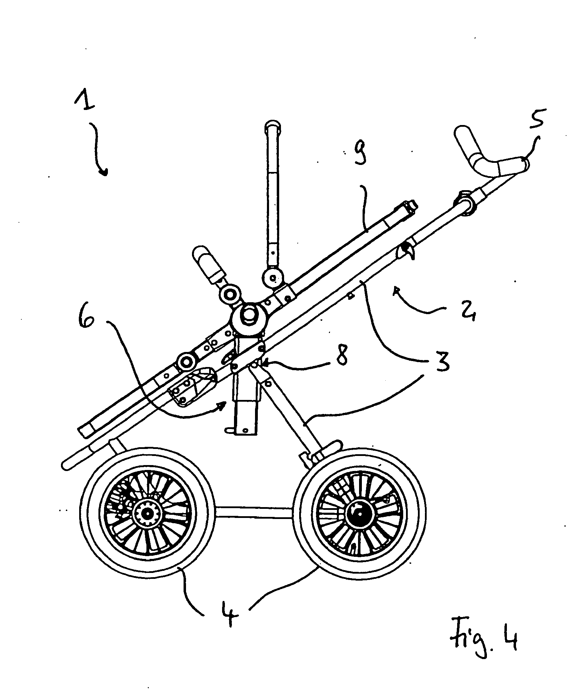

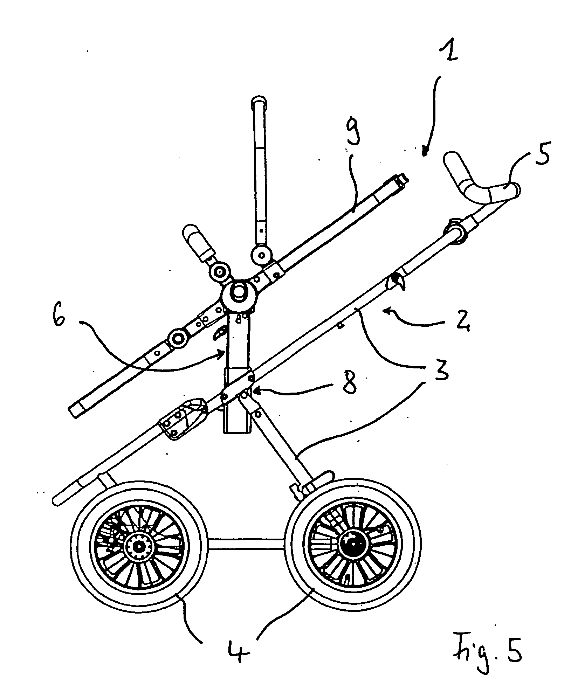

In den Figuren 3 bis 5 ist das erfindungsgemäße Fahrgestell 1 gezeigt, wobei an der Anschlussvorrichtung 7 auf der Einrichtung 6 zur Höhenverstellung ein Rahmen 9 für einen Kinderkarrensitz befestigt ist. Insbesondere der Vergleich zwischen den Figuren 4 und 5 zeigt, wie mittels der Einrichtung 6 zur Höhenverstellung die Höhe eines Kinderkarrensitzes (von dem hier nur der Rahmen 9 gezeigt ist), verändert werden kann. Gleiches gilt für die Montagehöhe einer Kinderwagenliegeschale, die in gleichartiger Weise mit ihrem Rahmen an der Anschlussvorrichtung 7 festgelegt werden und mittels der Einrichtung 6 zur Höhenverstellung in ihrer Montagehöhe verstellt werden kann. Die Montagehöhe der Einrichtung 6 und die maximale "Ausfahrhöhe" sind bei diesem Ausführungsbeispiel des Fahrgestells 1 so bemessen, dass bei einer Nutzung des Fahrgestells 1 als Unterteil einer Kinderkarre ein in dem zugehörigen Kinderkarrensitz befindliches Kind in der hochgestellten Position der Einrichtung 6 zur Höhenverstellung bequem an einem Tisch z.B. in einem Restaurant sitzen kann. Auf diese Weise ersetzt eine mit dem erfindungsgemäßen Fahrgestell 1 ausgestatte Kinderkarre einen Kinderhochstuhl.

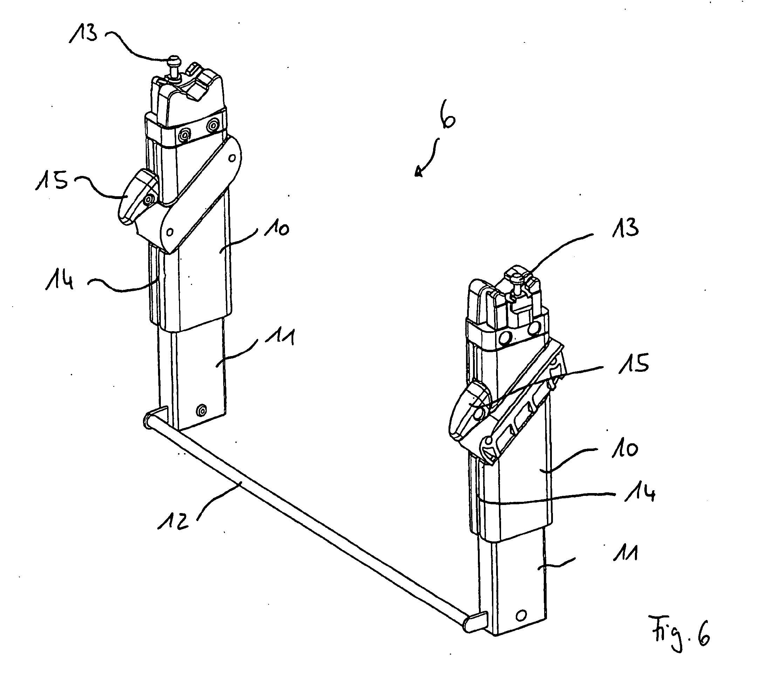

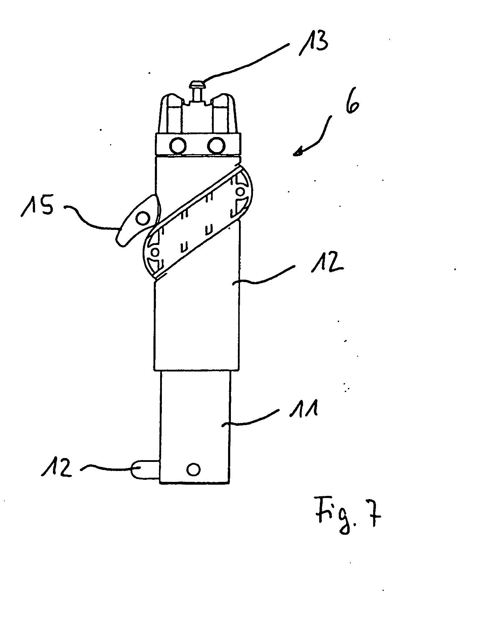

In den Figuren 6, 7, 8a und 8b ist die Einrichtung 6 zur Höhenverstellung in verschiedenen Ansichten noch einmal separat und vergrößert dargestellt. Anhand dieser Figuren wird die Funktionsweise dieser Einrichtung 6 nunmehr erläutert.

Die Einrichtung 6 besteht im wesentlichen aus zwei seitlich an dem Gestell 2 angeordneten Führungsrohren 10, in denen Innenrohre 11 verschiebbar und arretierbar angeordnet sind. Sowohl Führungsrohre 10 als auch Innenrohre 11 sind in diesem Beispiel Rechteckrohre. Die Innenrohre 11 sind an ihren unteren Enden über eine Verbindungsstange 12 aus unten näher erläuterten Gründen miteinander verbunden.

Auf der oberen Stirnseite eines jeden Innenrohres 11 ist als wesentlicher Bestandteil der Anschlussvorrichtung 7 ein Verriegelungszapfen 13 angeordnet, der zum Anschließen einer Kinderwagenliegewanne oder dergleichen mit an diesem Element angeordneten Zapfenaufnahmen zusammenwirkt und mit einem an seinem oberen Ende ausgebildeten Vorsprung ein entsprechendes Verriegelungselement in der Zapfenaufnahmen hintergreift und festsitzt.

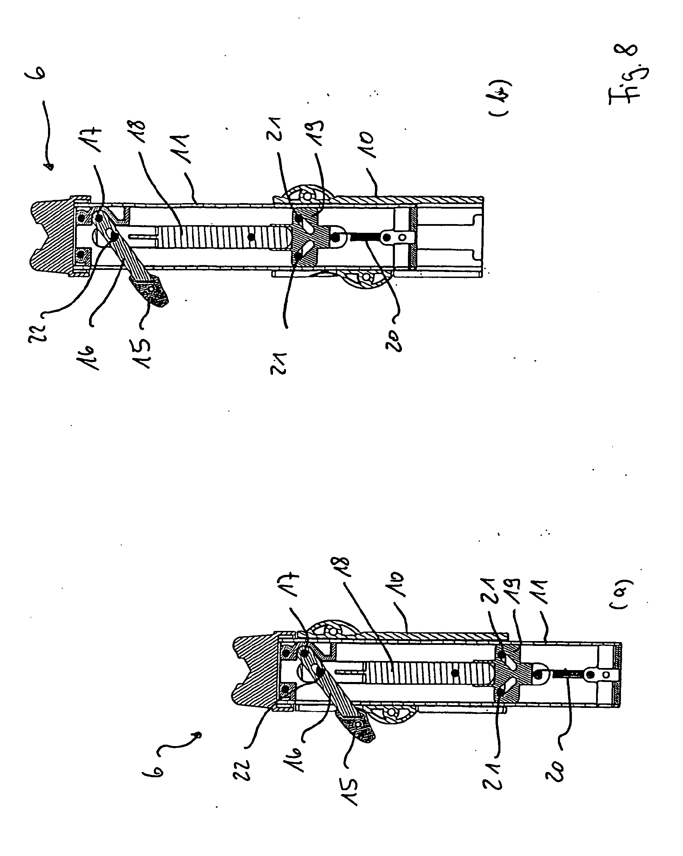

In dem Führungsrohr 10 ist ein im wesentlichen vertikal verlaufender Längsschlitz 14 vorgesehen, durch welchen ein in dem Innenrohr 11 festgelegter Auslösehebel 16 mit seinem Betätigungselement 15 hindurchgeführt ist (vgl. Fig. 8).

Der Mechanismus zum Festlegen des Innenrohres 11 in dem Führungsrohr 10 in unterschiedlichen Höhenpositionen ist in Figuren 8a und 8b in den jeweiligen Schnittdarstellungen näher gezeigt. In den Figuren 8a und 8b ist die Einrichtung 6 in einer untersten Position (Fig. 8a) und einer obersten Position (Fig. 8b) gezeigt. Die Höhendifferenz zwischen den in Figuren 8a und 8b gezeigten Positionen beträgt in diesem Ausführungsbeispiel etwa 125 mm.

In dem Innenrohr 11 ist der Auslösehebel 16 an einem Drehpunkt 17 festgelegt. An einem Aufhängungspunkt 22 ist an dem Auslösehebel 16 eine Zugstange 18 angeordnet, an welcher wiederum an ihrem unteren Ende eine Kulisse 19 festgelegt ist, die über eine mit dem Boden des Innenrohres 11 verbundene Feder 20 vorgespannt ist. Die Kulisse 19 enthält V-förmig angeordnete Schrägschlitze (Führungsschlitze), in denen in einem waagerechten Schlitz in der Seitenwand des Innenrohres 11 zusätzlich geführte, die Seitenwand des Innenrohres 11 durch den waagerechten Schlitz durchragende, verschiebbare Verriegelungsstifte 21 laufen.

Durch Betätigen des Auslösehebels 16 (Anheben des Betätigungselementes 15) wird die über den Aufhängungspunkt 22 mit dem Auslösehebel 16 verbundene Zugstange 18 und damit auch die Kulisse 19 entgegen der Federkraft der Feder 20 nach oben gezogen. Hierdurch werden durch die schrägen Schlitze in der Kulisse 19 die Verriegelungsstifte 21 von der Wand des Innenrohres 11 weg aufeinander zu gezwungen in eine enger stehende, von der Wand 11 weiter beabstandete Position. Die Verriegelungsstifte 21 liegen in den Figuren 8a und 8b gezeigten Position an hier nicht dargestellten Verriegelungsvorsprüngen des Außenrohres an und halten somit die Position des Innenrohres 11. Werden die Verriegelungsstifte 21 in der oben beschriebenen Weise durch Betätigen des Betätigungselementes 15 bzw. des Auslösehebels 16 nach innen gezwungen, werden sie von den Verriegelungsvorsprüngen befreit und können entlang des Führungsrohres 10 vertikal frei bewegt werden. Auf diese Weise kann das Innenrohr 11 in dem Führungsrohr 10 bewegt werden bis zu einer Position, in welcher wiederum Verriegelungsvorsprünge vorhanden sind, in denen die Verriegelungsstifte 21 arretieren können. Dies geschieht beim Loslassen des Auslösehebels 16, da durch die Federkraft der Feder 20 die Kulisse 19 und damit die Zugstange 18 und der Auslösehebel 16 wieder in die ursprüngliche Position nach unten gezogen werden, wodurch, gezwungen durch die Form der Schrägschlitze in der Kulisse 19, die Verriegelungsstifte 21 wieder voneinander weg und nach außen gedrückt werden. In dieser Stellung können sie, wie oben bereits erwähnt, erneut hinter entsprechenden Verriegelungsvorsprüngen positioniert werden und somit das Innenrohr 11 in einer vorbestimmten Position gegenüber dem Außenrohr 10 verriegelt werden.

Schließlich soll, wie oben bereits angekündigt, die Funktion der Verbindungsstange 12 erläutert werden. Diese dient dazu, dass die Innenrohre 11 in den Führungsrohren 10 nicht für jede Seite unabhängig in ihrer Höhenposition verschoben werden können, sondern nur gemeinsam. Damit ist sichergestellt, dass stets eine waagerechte Ausrichtung der beiden die Anschlussvorrichtung 7 bildenden Verriegelungszapfen eingehalten wird, so dass es nicht zu einer Verkippung eines auf der Anschlussvorrichtung 7 angeordneten Elementes, z.B. einer Kinderwagenliegeschale oder eines Kinderkarrensitzes (und einer damit verbundenen Unfallgefahr) kommen kann.

Aus der obigen Beschreibung des Ausführungsbeispiels ist noch einmal deutlich geworden, dass mit der Erfindung ein Fahrgestell 1 ein Kinderwagen, eine Kinderkarre oder dergleichen angegeben ist, das eine einfach zu realisierende, vom Gewicht her leichte Höhenverstellbarkeit einer in dem Fahrgestell angeordneten Kinderliegeschale, eines Kinderkarrensitzes oder dergleichen Elemente ermöglicht. Darüber hinaus kann das erfindungsgemäße Fahrgestell 1 in einer zusammenklappbaren Variante nach wie vor auf ein geringes Maß reduzieren werden.

### Bezugszeichenliste

- 1: Fahrgestell
- 2: Gestell
- 3: Strebe
- 4: Rad
- 5: Griff
- 6: Einrichtung zur Höhenverstellung
- 7: Anschlussvorrichtung
- 8: Gelenk
- 9: Rahmen
- 10: Führungsrohr
- 11: Innenrohr
- 12: Verbindungsstange
- 13: Verriegelungszapfen
- 14: Längsschlitz
- 15: Betätigungselement
- 16: Auslösehebel
- 17: Drehpunkt
- 18: Zugstange
- 19: Kulisse
- 20: Feder
- 21: Verriegelungsstift
- 22: Aufhängungspunkt

## Patentansprüche

1. Fahrgestell für einen Kinderwagen, eine Kinderkarre oder dergleichen mit einem aus miteinander verbundenen Streben (3) aufgebauten Gestell (2), an dem Gestell (2) angeordneten Rädern (4), einem an dem Gestell (2) angeordneten Griff (5) und mit einer Anschlussvorrichtung (7) zum Festlegen einer Kinderwagenliegeschale, eines Kinderkarrensitzes, eines Kinder-Autosicherheitssitzes oder dergleichen, wobei eine Einrichtung (6) zum Verstellen der Höhe der Anschlussvorrichtung (7) relativ zu der Position der Räder (4) vorgesehen ist, **dadurch gekennzeichnet, dass** die Einrichtung (6) zum Verstellen der Höhe der Anschlussvorrichtung (7) durch jeweils auf einer Seite an dem Gestell (2) angeordnete, im wesentlichen vertikal verlaufende Führungsrohre (10) und je ein in jedem der Führungsrohre (10) verschiebbar und in wenigstens zwei unterschiedlichen Positionen arretierbar geführtes Innenrohr (11), an dessen oberen Abschnitt jeweils ein Anschlusselement (13) als Bestandteil der Anschlussvorrichtung (7) angeordnet ist, gebildet ist.

2. Fahrgestell nach Anspruch 1, **dadurch gekennzeichnet, dass** die Distanz zwischen zwei möglichen Endstellungen eines Innenrohres (11) in dem zugeordneten Führungsrohr (10) zwischen 100 mm und 150 mm, vorzugsweise zwischen 120 mm und 130 mm beträgt.

3. Fahrgestell nach einem der vorhergehenden Ansprüche, **dadurch gekennzeichnet, dass** die Innenrohre (11) miteinander über eine starre Verbindung (12) verbunden sind.

4. Fahrgestell nach einem der vorhergehenden Ansprüche, **dadurch gekennzeichnet, dass** arretierbare Gelenkverbindungen (8) zwischen einzelnen der Streben (3) des Gestells (2) vorgesehen sind zum Zusammenklappen des Gestells (2) und dass die Führungsrohre (10) im Bereich derartiger Gelenke (8) angeordnet sind.

5. Fahrgestell nach einem der vorhergehenden Ansprüche, **dadurch gekennzeichnet, dass** die Führungs- (10) und die Innenrohre (11) Vierkantrohre sind.

6. Fahrgestell nach Anspruch 5, **dadurch gekennzeichnet, dass** in jedem Innenrohr (11) ein Paar in einer Kulisse (19) geführter, durch die Kulissenführung hinsichtlich ihres Abstandes verlagerbarer Verriegelungsstifte (21) angeordnet ist, wobei die Kulissen (19) über eine federbelastete Zugstange (18) mit einem in dem Innenrohr (11) schwenkbar festgelegten Auslösehebel (16) verbunden ist, welcher durch einen vertikal verlaufenden Schlitz (14) in dem Führungsrohr (10) mit einem Betätigungselement (15) aus letzterem hinausragt, und dass in dem Führungsrohr (10) in wenigstens zwei unterschiedlichen Positionen Verriegelungsvorsprünge vorgesehen sind, hinter denen die Verriegelungsstifte (21) arretieren.

7. Fahrgestell nach einem der vorhergehenden Ansprüche, **dadurch gekennzeichnet, dass** die Anschlusselemente (13) auf den Stirnseiten der Innenrohre (11) angeordnet und Riegelzapfen oder Zapfenaufnahmen sind, die mit entsprechend geformten Zapfenaufnahmen bzw. Riegelzapfen an einer Kinderwagenliegeschale, einem Kinderkarrensitz, einem Kinder-Autosicherheitssitz oder dergleichen zusammenwirken.

## Claims

1. A rolling chassis for pram, a baby buggy or similar with a chassis (2) consisting of struts (3) connected to one another, wheels (4) arranged on the chassis (2), a handle (5) arranged on the chassis (2) and with a coupling device (7) for mounting a pram seat shell, a baby buggy seat, a baby self-securing seat or similar, wherein a device (6) is provided for height adjustment of the coupling device (7) with respect to the position of the wheels (4), **characterised in that** the device (6) for height adjustment of the coupling device (7) consists of guiding pipes (10) running substantially vertically, arranged on one side of the chassis (2) and an inner pipe (11) is mobile in each of the guiding pipes (10) and lockable in at least two different positions, wherein a coupling element (13) is mounted at the upper section of said inner pipe as integral part of the coupling device (7).

2. A rolling chassis according to claim 1, **characterised in that** the distance between two possible end positions of an inner pipe (11) in the allocated guiding pipe (10) ranges between 100 mm and 150 mm, preferably between 120 mm and 130 mm.

3. A rolling chassis according to any of the preceding claims, **characterised in that** the inner pipes (11) are linked together via a rigid connection (12).

4. A rolling chassis according to any of the preceding claims, **characterised in that** lockable articulated links (8) are provided individually between the struts (3) of the chassis (2) for folding up said chassis (2) and that the guiding pipes (10) are arranged in the region of such articulations (8).

5. A rolling chassis according to any of the preceding claims, **characterised in that** the guiding (10) and inner pipes (11) are square pipes.

6. A rolling chassis according to claim 5, **characterised in that** each inner pipe (11) includes a pair of locking pins (21) situated in a crank (19) whose distance can be changed via the crank guide, whereas the crank (19) is connected via a spring-loaded tie rod (18) to a release lever (16) swivel-mounted in the inner pipe (11), which protrudes therefrom through a vertically running slit (14) in the guiding pipe (10) with an actuating element (15), and that locking protrusions are arranged in at least two different positions in the guiding pipe (10), behind which the locking pins (21) are locked.

7. A rolling chassis according to any of the preceding claims, **characterised in that** the connection elements (13) are arranged on the front sides of the inner pipes (11) and consist of locking spigots or spigot seats, which co-perate with matching spigot seats and/or locking spigots on a pram seat shell, a baby buggy seat, a baby self-securing seat or similar.

## Revendications

1. Châssis roulant pour poussette, landau ou autres avec un châssis (2) consistant en montants (3) connectés l'un à l'autre, des roues (4) disposées sur le châssis (2), une poignée (5) disposée sur le châssis (2) et un dispositif d'accouplement (7) permettant de monter une coquille de siège de poussette, un siège de landau, un siège bébé à fixation automatique ou autres, un dispositif (6) étant prévu pour le réglage en hauteur du dispositif d'accouplement (7) par rapport à la position des roues (4), **caractérisé en ce que** le dispositif (6) pour le réglage en hauteur du dispositif d'accouplement (7) consiste en tubes de guidage (10) coulissant de manière sensiblement verticale, disposés d'un côté du châssis (2) et un tube interne (11) est mobile dans chacun des tubes de guidage (10) et verrouillable dans au moins deux positions différentes, un élément d'accouplement (13) étant monté dans la partie supérieure dudit tube interne comme partie intégrante du dispositif d'accouplement (7).

2. Châssis roulant selon la revendication 1, **caractérisé en ce que** la distance entre deux positions d'extrémité possibles d'un tube interne (11) dans le tube de guidage (10) correspondant est comprise entre 100 mm et 150 mm, de préférence entre 120 mm et 130 mm.

3. Châssis roulant selon l'une quelconque des revendications précédentes, **caractérisé en ce que** les tubes internes (11) sont reliés ensemble par une connexion rigide (12).

4. Châssis roulant selon l'une quelconque des revendications précédentes, **caractérisé en ce que** des liaisons articulées verrouillables (8) sont prévues individuellement entre les montants (3) du châssis (2) pour replier ledit châssis (2) et que les tubes de guidage (10) sont disposés dans la zone desdites articulations (8).

5. Châssis roulant selon l'une quelconque des revendications précédentes, **caractérisé en ce que** les tubes de guidage (10) et les tubes internes (11) sont des tubes carrés.

6. Châssis roulant selon la revendication 5, **caractérisé en ce que** chaque tube interne (11) comporte une paire de goupilles de verrouillage (21) situées dans une coulisse (19) dont la distance peut être changée à l'aide du guide de coulisse, la coulisse (19) étant connectée par le biais d'une tige de raccordement montée sur ressort (18) à un levier de libération (16) monté de manière pivotante dans le tube interne (11), qui fait saillie à partir de celui-ci à travers une fente verticale (14) dans le tube de guidage (10) avec un élément d'actionnement (15), et en que des parties saillantes sont disposés en au moins deux points différents dans le tube de guidage (10), derrière lequel les goupilles de verrouillage (21) se bloquent.

7. Châssis roulant selon l'une quelconque des revendications précédentes, **caractérisé en ce que** les éléments de connexion (13) sont aménagés sur les côtés avant des tubes internes (11) et se composent de tourillons de verrouillage ou de sièges de tourillon, coopérant avec des sièges de tourillon et/ou des tourillons de verrouillage correspondant sur une coquille de siège de poussette, un siège de landau, un siège bébé à fixation automatique ou autres.
